# EUROPÄISCHE PATENTSCHRIFT

(11) **EP 1 375 993 B1**
(45) Veröffentlichungstag und Bekanntmachung des Hinweises auf die Patenterteilung: **06.04.2005**
(21) Anmeldenummer: 02013885.5
(22) Anmeldetag: 24.06.2002
(51) Int. Cl.: F16L 25/00, F16L 37/14

(54) **Kupplungsmuffe für gewellt ausgebildete Rohre**
Coupling sleeve for corrugated pipes
Manchon d'accouplement pour tuyaux ondulés

(43) Veröffentlichungstag der Anmeldung: 02.01.2004
(73) Patentinhaber: Zehnder Verkaufs- und Verwaltungs AG, 5722 Gränichen (CH)
(72) Erfinder: Kriesi, Ruedi, Dr., 8820 Wädenswil (CH)
(74) Vertreter: Stenger, Watzke & Ring Patentanwälte

(56) Entgegenhaltungen:
- DE-U- 20 104 203
- FR-A- 2 808 071
- GB-A- 2 349 188
- US-A- 5 513 882

## Beschreibung

Die Erfindung betrifft ein Sicherungssystem zur endseitigen Lagesicherung eines in Längsrichtung gewellt ausgebildeten Rohres.

Rohre im allgemeinen wie auch gewellt ausgebildete Rohre im speziellen sind für ihre Lagesicherung endseitig zu fixieren. Dies kann beispielsweise dadurch geschehen, daß die Rohre endseitig verklebt oder verschraubt werden. Auch ist es aus dem Stand der Technik bekannt, Quetschvorrichtungen zu verwenden, bei denen die Rohre endseitig unter Aufbringung einer Klemmkraft derart zusammengequetscht werden, daß eine Relativverschiebung des Rohres gegenüber der Quetscheinrichtung zumindest hinsichtlich geringer Zugkräfte unterbunden ist.

Der Nachteil vorbekannter Einrichtungen ergibt sich insbesondere aus dem Umstand, daß eine Handhabung aufwendig ist und insbesondere zu Reparaturoder Reinigungszwecken montageunfreundlich, d.h. nur unter erheblichem Zeitaufwand demontierbar bzw. montierbar ist. Zudem ist es meist erforderlich, Spezialwerkzeug zu verwenden, so daß ein Lösen der Fixier- oder Halteeinrichtung nur von Personal mit entsprechendem Werkzeug durchgeführt werden kann.

Ein Sicherungssystem entsprechend dem Oberbegriff des Anspruchs 1 ist aus dem Dokument GB 2,349,188 bekannt.

Es besteht somit ein grundlegendes Bedürfnis, ein Sicherungssystem zur endseitigen Lagesicherung von Rohren bereitzustellen, das eine exakte und dauerhafte Festlegung der Rohre gewährleistet, das aber darüber hinaus auch in einfacher Weise insbesondere im Hinblick auf Montage- und Reparaturzwecke bedient werden kann. Es ist daher **Aufgabe** der Erfindung, ein Sicherungssystem der vorgenannten Art bereitzustellen, das bei gleichzeitig einfacher Handhabung eine dauerhafte Sicherung eines in Längsrichtung gewellt ausgebildeten Rohres gewährleistet.

Zur **Lösung** dieser Aufgabe, wird mit der Erfindung ein Sicherungssystem gemäss Anspruch 1 vorgeschlagen.

Weitere Vorteile und Merkmale der Erfindung ergeben sich aus der nachfolgenden Beschreibung anhand der Figuren. Dabei zeigen:
- Fig.1:: das erfindungsgemäße Sicherungssystem mit einer als Verbindungsmuffe ausgebildeten Rohrmuffe;
- Fig. 2:: eine teilgeschnittene Seitenansicht gemäß der Schnittlinie II-II gemäß Fig. 1;
- Fig. 3:: in einer Seitenansicht einen U-förmig ausgebildeten Sicherungsstift;
- Fig.4:: in einer perspektivischen Darstellung die Verwendung mehrerer Verbindungsmuffen mittels einer gemeinsamen Montageplatte;
- Fig. 5:: in einer perspektivischen Darstellung die Verwendung mehrerer Anschlußmuffen mittels einer gemeinsamen Anschlußplatte und einem nicht erfindungsgemäßen Sicherungssystem
- Fig. 6:: in einer teilgeschnittenen Seitenansicht einer Anschlußmuffe mit schlitzartig ausgebildeten Ausnehmungen.

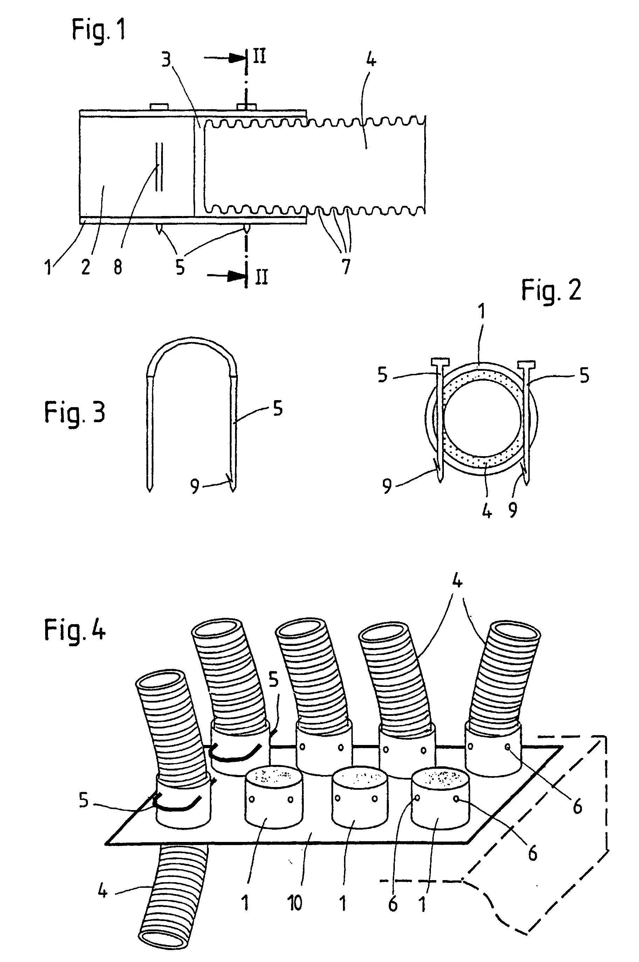

Fig. 1 zeigt das erfindungsgemäße Sicherungssystem mit einer als Verbindungsmuffe 1 ausgebildeten Rohrmuffe. Diese Verbindungsmuffe 1 verfügt über zwei Aufnahmebereiche 2 und 3 zur Aufnahme jeweils eines Rohrendes 4. Zur Sicherung des jeweils in die Aufnahmebereiche 2 und 3 hineingeschoben Rohrendes 4 sind Sicherungsstifte 5 vorgesehen. Diese sind durch als Bohrungen 6 ausgebildete Ausnehmungen der Verbindungsmuffe 1 hindurchgesteckt und innerhalb eines Wellentals 7 des gewellt ausgebildeten und in die Verbindungsmuffe 1 hineingeführten Rohrendes angeordnet. Hierdurch wird eine Sicherung des gewellt ausgebildeten Rohres gegenüber der Verbindungsmuffe 1 erreicht, die eine relative Längsverschiebung von Verbindungsmuffe 1 und Rohrende 4 zueinander unterbindet, so daß das Rohrende 4 insgesamt mittels der Verbindungsmuffe 1 und des Sicherungsstifts 5 in seiner Lage definiert und fixiert ist.

Der besseren Übersicht wegen ist in Fig. 1 eine Verbindungsmuffe 1 gezeigt, bei welcher in den Aufnahmebereich 2 kein Rohrende hineingeschoben ist. Dadurch wird der Blick frei auf den Sicherungsstift 5, wobei deutlich zu erkennen ist, daß dieser derart im Randbereich der kreisförmig ausgebildeten Rohrmuffe angeordnet ist, daß er nur über einen mittleren Abschnitt 8 in den von der Verbindungsmuffe 1 umschlossenen Volumenraum hineinragt. Dieser mittlere Abschnitt 8 greift, wie hinsichtlich des in den Aufnahmebereich 3 hineingeschobenen Rohrendes 4 gezeigt, in das gerade an der Stelle des Sicherungsstiftes vorgesehene Wellental 7 des gewellt ausgebildeten Rohres ein und schafft so eine formschlüssige Verbindung zwischen der Verbindungsmuffe-Sicherungsstift-Anordnung einerseits und dem zu sichernden Rohrende 4 andererseits. Dieser Zusammenhang ist auch Fig. 2 zu entnehmen, die die lagefixierte Anordnung des Rohrendes 4 in einer teilgeschnittenen Seitenansicht zeigt.

Zu erkennen in Fig. 2 ist darüber hinaus, daß nicht nur ein Sicherungsstift 5 sondern zwei Sicherungsstifte 5 vorgesehen sind. Hierdurch wird eine verbesserte Sicherung des Rohrendes 4 gegenüber der Anordnung mit nur einem Sicherungsstift 5 erreicht. Die Sicherungsstifte 5 weisen jeweils in Form eines Widerhakens 9 einen Demontageschutz auf. Hierdurch wird sichergestellt, daß die Sicherungsstifte nicht ungewollt aus der Bohrung 6 herausgezogen werden können. Für eine Demontage ist es dabei lediglich erforderlich, den Widerhaken zusammenzupressen und so den Demontageschutz aufzuheben. Alternativ zu der in Fig. 2 dargestellten Verwendung zweier separater Sicherungsstifte 5 kann auch ein U-förmig ausgebildeter Sicherungsstift eingesetzt werden. Einen solchen Sicherungsstift 5 zeigt Fig. 3.

In Fig. 4 ist die Anordnung einer Vielzahl von Verbindungsmuffen 1 gezeigt, die allesamt Bestandteil einer gemeinsamen Montageplatte 10 sind. Diese Art der Ausgestaltung ist insbesondere dann vorteilhaft, wenn eine Vielzahl von Rohren strömungstechnisch miteinander verbunden werden sollen und es zugleich darauf ankommt, eine geordnete Struktur zu erzeugen, die einen einfachen und sicheren Zugriff, gegebenenfalls auch zum Zwecke der Reparatur, gezielt auf einzelne Rohre bzw. Verbindungsmuffen 1 zuläßt.

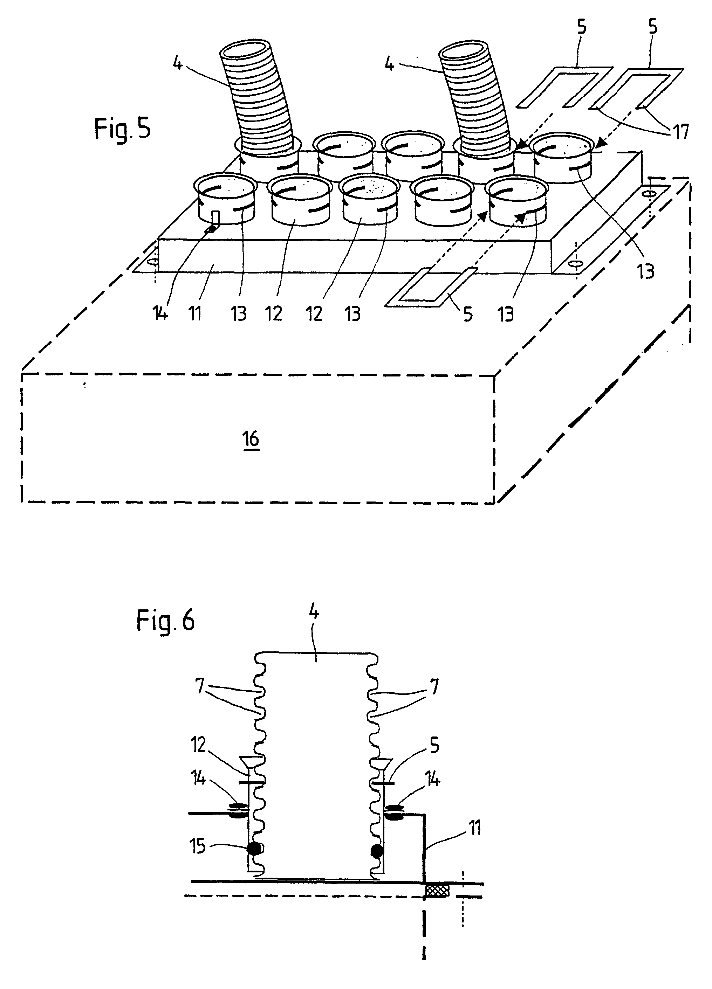

Fig. 5 zeigt die Verwendung mehrerer Rohrmuffen, die als Anschlußmuffen 12 ausgebildet sind. Im Unterschied zu der in Fig. 4 dargestellten Ausführungsform ist unterhalb der gemeinsamen Anschlußplatte 11 der Anschlußmuffen 12 ein gemeinsamer Verteilerraum 16 vorgesehen. Zur Befestigung der Rohrenden 4 innerhalb der Anschlußmuffen 12 sind gleichfalls Sicherungsstifte 5 vorgesehen, diese werden jedoch nicht in als Bohrungen ausgebildete Ausnehmung hineingeführt, sondern in schlitzartig ausgebildete Ausnehmungen 13. Die Wirkungsweise entspricht jedoch der wie sie bereits zum Ausführungsbeispiel nach Fig. 4 beschrieben wurde. Alternativ zu den mit Widerhaken ausgestalteten Sicherungsstiften weisen die mit Fig. 5 dargestellten Sicherungsstifte 5 beidseitig jeweils einen Abschnitt 17 auf, der nach einem Einführen des Sicherungsstiftes 5 in die Schlitze 13 umgebogen wird und so eine Demontagesicherung des Sicherungsstiftes 5 gewährleistet. Für eine Anordnung der Anschlußmuffen 12 an die Anschlußplatte 11 kann vorgesehen sein, diese mittels einer Verschweißung 14 an der Anschlußplatte 11 zu befestigen. Alternativ hierzu kann auch vorgesehen sein, die Anschlußmuffen 12 auf die Anschlußplatte 11 aufzunieten.

Fig. 6 zeigt in einer teilgeschnittenen Seitenansicht die Anordnung einer Anschlußmuffe 12 an der Anschlußplatte 11 sowie der Anordnung eines Rohrendes 4 innerhalb der Anschlußmuffe 12. Zu erkennen ist hier, daß die Anschlußmuffe 12 mittels Schweißungen 14 an der Anschlußplatte 11 befestigt ist. Für eine Abdichtung gegenüber der umgebenden Atmosphäre ist das Rohrende 4 unter Verwendung einer Abdichtung 15 in die Anschlußmuffe 12 eingebracht. Wie auch hier deutlich zu erkennen ist, greift der Sicherungsstift 5 in Wellentäler 7 des Rohrendes 4 und unterbindet so die Längsverschieblichkeit des Rohrendes 4 innerhalb der Anschlußmuffe 12. Das Rohrende 4 ist mithin gegenüber der Anschlußplatte 11 lagefixiert und gesichert.

Als Anwendungsbeispiel für das erfindungsgemäße Sicherungssystem sei ein Heiz- oder Belüftungsrohrsystem genannt. Bei einem solchen System werden eine Vielzahl von Räumen ausgehend von einer zentralen Verteilereinheit mit Frischluft und/oder Warmluft versorgt. Diese Luft wird über im Mauerwerk oder in dafür vorgesehenen Schächten angeordnete Rohre verteilt, wobei zum Anschluß der Rohrenden an die zentrale Verteilereinheit bzw. an die im jeweiligen Raum vorgesehene Ausgabeeinheit bzw. der Verbindung zweier Rohre miteinander das erfindungsgemäße Sicherungssystem in vorteilhafter Weise eingesetzt werden kann.

Das vorbeschriebene Beispiel dient einzig der näheren Erläuterung der Erfindung und ist nicht beschränkend.

### Bezugszeichenliste

- 1: Verbindungsmuffe
- 2: Aufnahmebereich
- 3: Aufnahmebereich
- 4: Rohrende
- 5: Sicherungsstift
- 6: Bohrung
- 7: Wellental
- 8: Abschnitt
- 9: Widerhaken
- 10: Montageplatte
- 11: Anschlußplatte
- 12: Anschlußmuffe
- 13: Schlitz
- 14: Schweißung
- 15: Abdichtung
- 16: Verteilerraum
- 17: Abschnitt

## Patentansprüche

1. Sicherungssystem zur endseitigen Sicherung eines in Längsrichtung gewellt ausgebildeten Rohres, umfassend eine Rohrmuffe (1, 12), einen Sicherungsstift (5) sowie eine Ausnehmung in der Rohrmuffe zur Aufnahme des Sicherungsstiftes (5), **dadurch gekennzeichnet, daß** der Sicherungsstift (5) mit einem Demontageschutz (9) versehen ist, der wenigstens einen elastischen Widerhaken aufweist.

2. Sicherungssystem nach Anspruch 1, **dadurch gekennzeichnet, daß** der Sicherungsstift (5) U-förmig ausgebildet ist.

3. Sicherungssystem nach einem der vorangegangenen Ansprüche, **dadurch gekennzeichnet, daß** die Rohrmuffe (1, 12) als Anschlußmuffe (12) ausgebildet und mit einer Anschlußplatte (11) verbunden ist.

4. Sicherungssystem gemäß Anspruch 3, **dadurch gekennzeichnet, daß** die Anschlußplatte (11) mit einem Verteilerraum verbunden ist.

## Claims

1. A fastening system for fastening the end of a pipe, which is corrugated in the longitudinal direction, including a socket (1, 12), a locking pin (5) and an opening for receiving the locking pin (5), **characterised in that** the locking pin (5) is provided with a removal protector (9), which has at least one barb.

2. A fastening system as claimed in Claim 1, **characterised in that** the locking pin (5) is of U-shape.

3. A fastening system as claimed in one of the preceding claims, **characterised in that** the socket (1, 12) is constructed in the form of a connecting socket (12) and is connected to a connecting plate (11).

4. A fastening system as claimed in Claim 3, **characterised in that** the connecting plate (12) is connected to a manifold.

## Revendications

1. Système de retenue pour la retenue du côté de l'extrémité d'un tuyau ondulé dans le sens longitudinal, comprenant un manchon (1, 12), une goupille de retenue (5) ainsi qu'une encoche dans le manchon pour le positionnement de la goupille de retenue (5), **caractérisé en ce que** la goupille de retenue (5) est munie d'une protection contre le démontage (9) qui comporte au moins une barbe élastique.

2. Système de retenue selon la revendication 1, **caractérisé en ce que** la goupille de retenue (5) a une forme en U.

3. Système de retenue selon l'une quelconque des revendications précédentes, **caractérisé en ce que** le manchon (1, 12) est conçu comme manchon de raccordement (12) et est relié à une plaque de raccordement (11).

4. Système de retenue selon la revendication 3, **caractérisé en ce que** la plaque de raccordement (11) est reliée à une chambre de distribution.
